# EUROPÄISCHE PATENTANMELDUNG

(11) **EP 4 327 926 A1**
(43) Veröffentlichungstag der Anmeldung: **28.02.2024**
(21) Anmeldenummer: 22192104.2
(22) Anmeldetag: 25.08.2022
(51) Int. Cl.: B01J 2/20, C05G 5/40

(54) **VERFAHREN UND ANLAGE ZUM HERSTELLEN VON DÜNGERGRANULATEN**

(71) Anmelder: Hauert HBG Dünger AG, 3257 Grossaffoltern (CH)
(72) Erfinder: KOZUR, Alexander, 3718 Kandersteg (CH)
(74) Vertreter: Wunderlich & Heim Patentanwälte Partnerschaftsgesellschaft mbB

(57) **Zusammenfassung**

Die Erfindung betrifft ein Verfahren zum Herstellen von Düngergranulaten bestehend aus mindestens einer pulverförmigen oder körnigen Düngerkomponente und mindestens einer Matrixkomponente, welche ein biologisch abbaubarer Stoff ist und bei einer Raumtemperatur fest und bei einer Verarbeitungstemperatur, welche oberhalb der Raumtemperatur und einer Schmelztemperatur des Stoffes liegt, aufgeschmolzen und fließfähig ist, wobei die Matrixkomponente auf eine Verarbeitungstemperatur erwärmt und aufgeschmolzen wird, die aufgeschmolzene Matrixkomponente mit der mindestens einen Düngerkomponente zu einer fließfähigen oder pastösen Mischung vermengt wird, die Mischung einer Granuliervorrichtung zugeführt wird, und in der Granuliervorrichtung die Mischung zu Granulat gebildet wird, welches eine Temperatur unterhalb der Schmelztemperatur der Mischung aufweist und bei Raumtemperatur fest ist.

## Beschreibung

Die Erfindung betrifft ein Verfahren zum Herstellen von Düngergranulaten gemäß dem Anspruch 1 sowie eine Anordnung zum Herstellen von Düngergranulaten gemäß dem Anspruch 10.

Düngergranulate werden vielfältig insbesondere in der Landwirtschaft sowie im Gartenbau zur Sicherstellung einer ausreichenden Nährstoffversorgung von Pflanzen eingesetzt. Düngergranulate weisen eine oder mehrere Düngerkomponenten auf, insbesondere NPK-Düngerkomponenten.

Die Düngerkomponenten liegen in der Regel in einem pulverförmigen Zustand vor, der jedoch hinsichtlich Lagerung, Ausbringung, Staubverlusten und Auswaschung wenig praktikabel ist.

Es ist bekannt, pulverförmige Düngerkomponenten mit einem Bindemittel zu mischen und aus der Mischung Düngergranulate zu bilden. Es werden dabei in der Regel Bindemittel auf Wasserbasis eingesetzt. Dies ist effizient in der Herstellung und stellt gemeinhin keine zusätzliche Belastung für die Umwelt dar. Es können jedoch Probleme bei der Kornstabilität und damit der Lagerfähigkeit und Ausbringbarkeit auftreten.

Granulate mit einer Bindung auf Wasserbasis sind nach Ausbringung im Freien kaum stabil, so dass die Düngerkomponenten relativ schnell freigesetzt werden. Es kann daher vorkommen, dass freigesetzte Nährstoffe nicht optimal von den Pflanzen aufgenommen werden und so die Umwelt und insbesondere das Grundwasser belasten können. Zudem können weitere Düngemittelausbringungen erforderlich werden, was zeit-, arbeits- und kostenaufwändig ist.

Eine verbesserte Bindung von Düngergranulaten kann durch den Einsatz von chemischen Bindemitteln erreicht werden, mit welchen eine festere Bindung und ein gezielteres Freisetzungsverhalten der pulverförmigen Düngerkomponenten erzielt werden können. Häufig werden synthetische Polymere als eine Belastung für die Umwelt angesehen und können auch für bestimmte Einsatzzwecke nicht verwendet werden.

Der Erfindung liegt die **Aufgabe** zugrunde, ein Verfahren und eine Anlage anzugeben, mit welchen Düngergranulate effizient und mit hoher Nutzqualität hergestellt werden können.

Die Aufgabe wird zum einen durch ein Verfahren mit den Merkmalen des Anspruchs 1 und zum anderen durch eine Anlage mit den Merkmalen des Anspruchs 10 gelöst. Bevorzugte Ausführungsformen der Erfindung sind in den jeweils abhängigen Ansprüchen angegeben.

Die Erfindung umfasst ein Verfahren zum Herstellen von Düngergranulaten bestehend aus mindestens einer pulverförmigen und/oder körnigen Düngerkomponente und mindestens einer Matrixkomponente, welche ein biologisch abbaubarer Stoff ist und bei einer Raumtemperatur fest und bei einer Verarbeitungstemperatur, welche oberhalb der Raumtemperatur und einer Schmelztemperatur des Stoffes liegt, aufgeschmolzen und fließfähig ist, wobei die Matrixkomponente auf eine Verarbeitungstemperatur erwärmt und aufgeschmolzen wird, die aufgeschmolzene Matrixkomponente mit der mindestens einen Düngerkomponente zu einer fließfähigen oder pastösen Mischung vermengt wird, die fließfähige oder pastöse Mischung mittels einer Granuliervorrichtung weiter verarbeitet wird und die Mischung mit der Granuliervorrichtung zu Granulat gebildet wird, welches eine Temperatur unterhalb der Schmelztemperatur der Matrixkomponente aufweist und bei Raumtemperatur fest ist.

Gemäß der Erfindung können die Düngerkomponenten, welche mineralisch und/oder organisch sein können, zu verschiedenen Anteilen mit der schüttfähigen Matrixkomponente gemischt werden. Die Matrixkomponente erfüllt dabei mehrere Zwecke. Sie liegt bei der Verarbeitungstemperatur in einem aufgeschmolzenen, insbesondere flüssigen Zustand vor und bewirkt damit eine Fließfähigkeit der Mischung. Die Fließfähigkeit kann damit ohne Wasser generiert werden.

Mit formgebenden Prozesselementen wird die Mischung oberhalb der Raumtemperatur verarbeitet. Durch den Formgebungsprozess werden im warmen, also fließfähigen oder pastösen Zustand die Granulate hergestellt. Nach der Abkühlung der Mischung auf den festen Zustand bei Raumtemperatur, also bei einer Temperatur um 20°C, liegt ein fester Zustand vor und der Herstellungsprozess ist abgeschlossen.

Unter dem Begriff der Raumtemperatur ist ein üblicher Temperaturbereich zu verstehen, bei welchem die Granulate transportiert, gelagert und ausgebracht werden. Abhängig von Einsatzgebiet der Granulate und auch von der Jahreszeit kann somit unter Raumtemperatur auch eine Temperatur von bis zu 40°C verstanden werden. Die Verarbeitungstemperatur zum Herstellen der Granulate kann insbesondere in einem Temperaturbereich zwischen 70°C und 120°C liegen. Entsprechend weist die Matrixkomponente eine Schmelztemperatur auf, welche zwischen der Raumtemperatur einerseits und der Verarbeitungstemperatur andererseits liegt.

Ein weiterer Zweck der Matrixkomponente ist eine pflanzenbauliche Freisetzungsverzögerung der mindestens einen Düngerkomponente, welche während der Formgebung mit der Matrixkomponente vermengt und in diese eingearbeitet wird. Die Matrixkomponente weist insbesondere eine schlechte Wasserlöslichkeit und eine definierte langsame biologische Abbaubarkeit auf. Durch diese Eigenschaftskombination kann eine Freisetzungsverzögerung generiert werden. Dies ist zudem abhängig von Verhältnis Matrixkomponente zu Düngerkomponente und kann über einen Matrixanteil gesteuert werden. Vorzugsweise liegt das Verhältnis Matrixkomponente zu Düngerkomponente in einem Bereich von 1 : 2 bis 1 : 10.

Eine bevorzugte Verfahrensvariante besteht nach einer Weiterbildung der Erfindung darin, dass als Granuliervorrichtung ein Extruder oder eine Pelletierpresse eingesetzt wird. Zum Formen der Granulate kann dabei eine Lochplatte oder eine Matrize in einer horizontalen oder vertikalen Anordnung vorgesehen sein.

Dabei ist es insbesondere bevorzugt, dass als Extruder ein Einwellen- oder ein Mehrwellen-Extruder eingesetzt wird. Bei einem Mehrwellen-Extruder werden insbesondere zwei Wellen in einem sogenannten Doppelwellen-Extruder eingesetzt, welche miteinander kämmende Extruderwellen aufweisen. Dies erlaubt eine besonders gute Durchmischung der mindestens einen Düngerkomponente und der Matrixkomponente, wobei die Partikel der Düngerkomponente in die Matrixkomponente eingearbeitet und von dieser umschlossen wird. Hierdurch kann eine verlangsamte Freisetzung und damit ein besonders zuverlässiger Langzeitdünger erzielt werden.

Die Extruderwellen können gleichlaufend oder gegenläufig betrieben werden. Durch die kämmenden Extruderwellen, insbesondere bei einem Gleichläufer, aber auf bei einem Gegenläufer, kann die notwendige Wärmeenergie zum Aufschmelzen der Matrixkomponente allein oder zu einem gr0ßen Teil durch die Reibungswärme innerhalb des Extruders mit dem drehend angetriebenen Extruderwellen bewirkt werden. Alternativ oder ergänzend kann ein Gehäuse des Extruders, in welchem die Extruderwellen aufgenommen sind, mit Temperatiereinheiten versehen sein, mit welchen eine gezielte Wärmeenergiezuführung oder Wärmeenergieabführung bewirkt werden kann.

Die Temperiereinheiten können dabei mit elektrischen Heizspulen und/oder mit Leitungen zum Hindurchleiten eines Heiz- und/oder Kühlmediums versehen sein. Hierdurch kann eine definierte Temperaturführung beim Verarbeitungsverlauf entlang des Extruders von einem Extrudereingang zu einem Extruderausgang eingestellt werden.

Insbesondere ist es möglich, die Matrixkomponente bereits in einem aufgeschmolzenen Zustand in die Granuliervorrichtung, insbesondere einen Extruder, einzuleiten. Eine effiziente Verfahrensvariante kann darin gesehen werden, dass die eine oder die mehreren Düngerkomponenten und die Matrixkomponente, welche ebenfalls in einem pulverförmigen oder körnigen Zustand vorliegen können, in diesem festen Zustand in die Granuliervorrichtung, insbesondere in einen Extruder, etwa über einen Schütttrichter an der gleichen Stelle oder an einer voneinander beabstandeten Stelle eingebracht werden.

Bevorzugt kann die Matrixkomponente zuvorderst in einen Extruder eingeleitet und darin bereits erwärmt und vorzugsweise schon aufgeschmolzen werden, bevor an einer in Extrusionsrichtung beabstandeten Stelle die mindestens einen Düngerkomponente eingeleitet wird. Dies erleichtert ein Durchmischen und stellt eine besonders homogene Mischung sicher. Die Düngerkomponente wird vorzugsweise nicht aufgeschmolzen und verbleibt in einem pulver- und/oder körnigen Zustand.

Bei mehreren Düngerkomponenten können diese an der gleichen Stelle oder ebenfalls versetzt zueinander in den Extruder eingeleitet werden. Insbesondere temperaturempfindliche Düngerkomponenten können an in Extrusionsrichtung weiter nach hinten versetzten Positionen in eine bereits vorbearbeitete Mischung eingeleitet werden, so dass eine weitere Reibungsbeeinflussung der temperaturempfindlichen Düngerkomponente im weiteren Verlauf der Extrusionsverarbeitung begrenzt bleibt.

Nach einer weiteren Ausführungsvariante der Erfindung ist es vorteilhaft, dass als Matrixkomponente ein biologisch abbaubares Wachs, vorzugsweise Zuckerrohrwachse, Reiskleewachse, Karnaubawachse und/oder Bienenwachse und/oder ein biologisch abbaubares Polymer eingesetzt wird, insbesondere ein Biopolymer, welches vorzugsweise zellulosbasiert, ligninbasiert oder stärkebasiert ist. Als Wachse kommen grundsätzlich tierische, pflanzliche, mineralische/fossile sowie (teil)-synthetische Wachse mit schlechter Wasserlöslichkeit zum Einsatz. Bei (teil)-synthetischen Wachsen ist eine biologische Abbaubarkeit Voraussetzung. Ebenfalls können als Matrixkomponente biologisch abbaubare thermoplastische oder duroplastische Polymere dienen, sofern diese nicht oder schlecht in Wasser löslich sind. Die Matrixkomponente kann aus einem oder aus einer Kombination der vorgenannten Stoffe gebildet sein.

Als Düngerkomponente können sämtliche bekannte Rohstoffe zur Pflanzenernährung dienen, sowohl organische als auch mineralische/unorganische Materialien. Insbesondere kann es sich bei dem mindestens einen Düngerkomponente um eine N-,P- und/oder K-Komponente handeln. Insbesondere kann auch eine Kombination verschiedener Düngerkomponenten gegeben sein.

Für eine gute Umweltverträglichkeit ist es nach einer Variante der Erfindung vorteilhaft, dass als Matrixkomponente mindestens ein biologisch abbaubares Wachs, insbesondere ein pflanzliches Wachs und/oder ein teilsynthetisches Wachs, verwendet wird.

Weiterhin kann es nach einer Ausführungsform der Erfindung bevorzugt sein, dass als Matrixkomponente ein biologisch abbaubares Polymer, insbesondere ein Biopolymer, verwendet wird. Das Polymer kann dabei auch ein teilsynthetisches oder synthetisches Polymer sein, sofern die biologische Abbaubarkeit gegeben ist.

Die zuvor angeführten Wachse und Polymere als Stoffe für die Matrixkomponente können jeweils alleine oder in einer beliebigen Kombination hiervon als Matrixkomponente zum Einsatz kommen.

Für eine effiziente Herstellung ist es nach einer Variante der Erfindung vorteilhaft, dass die Mischung durch eine Lochplatte gedrückt und zu Granulatkörnern abgelängt und/oder geformt wird. Das Ablängen kann dabei vorzugsweise durch eine Schneideinrichtung erfolgen, welche vorzugsweise unmittelbar am Austritt des Extruders an oder nahe bei der Lochplatte angeordnet ist.

Die Schneideinrichtung kann insbesondere ein drehend angetriebenes Schneidmesser umfassen, welches die aus der Lochplatte austretenden Extrusionsstränge zu einer vorgegebenen Größe ablängt. In diesem Fall ist die Lochplatte so auszulegen, dass die austretenden Extrusionsstränge hinreichend formstabil und schneidfähig sind.

Alternativ können die Extrusionsstränge insbesondere bei einer vertikalen Anordnung auch noch in einem noch nicht vollständig ausgehärteten, weichen Zustand abgeführt werden, wobei diese Extrusionsstränge nach hinreichender Verfestigung zu den gewünschten Granulatkörnern geschnitten oder gebrochen werden.

Nach einer weiteren Ausführung der Erfindung ist es zweckmäßig, dass die Lochplatte aktiv gekühlt wird, wobei die Mischung definiert auf eine Temperatur unterhalb der Schmelztemperatur der Matrixkomponente abgekühlt wird. Hierdurch können insbesondere Granulatkörner mit einer im Wesentlichen zylindrischen Form gebildet werden. Durch Schneiden können diese zu einer gewünschten Länge abgeschnitten werden. So können besonders gleichmäßige Granulatkörner erzielt werden.

Alternativ kann ein anschließendes Brechen erfolgen, wobei etwa beim Einsatz einer Brechwalze eine größere Bandbreite an verschiedenen Granulatlängen erreicht wird. Dies kann für eine größere Vielfalt beim Freisetzungsvermögen durchaus gewünscht sein.

Eine besonders effiziente Herstellung des Düngergranulats wird nach einer Weiterbildung der Erfindung dadurch erzielt, dass das Verfahren insgesamt auf einem Mehrwellen-Extruder durchgeführt wird, wobei die mindestens einen Düngerkomponente und die Matrixkomponente in einem Extrusionsraum des Extruders eingeführt werden, dass die Matrixkomponente in dem Extrusionsraum aufgeschmolzen und mit der mindestens einen Düngerkomponente durch die Extruderwellen zu der Mischung vermischt wird und dass die Mischung am Ausgang des Extruders durch die Lochplatte extrudiert und zu Extrusionssträngen geformt wird, welche zu den Granulatkörnern durch Schneiden oder Brechen abgelängt werden. Hierdurch kann das Verfahren auf einer einzelnen Maschine oder im Wesentlichen mit dem Extruder durchgeführt werden. Dies ermöglicht einen besonders kompakten und effizienten Verfahrensablauf.

Die Erfindung umfasst weiterhin eine Anlage zum Herstellen von Düngergranulaten, wobei nach der Erfindung vorgesehen ist, dass die Anlage zum Durchführen eines der zuvor beschriebenen erfindungsgemäßen Verfahren ausgebildet ist. Durch den Einsatz der Anlage können dabei die zuvor beschriebenen Vorteile erzielt werden.

Eine vorteilhafte Anlage besteht nach einer Ausführungsform der Erfindung darin, dass diese eine Granuliervorrichtung aufweist, welche einen Extruder oder eine Pelletierpresse umfasst. Diese Granuliervorrichtungen ermöglichen ein besonders effizientes Erzeugen von Granulaten.

Insbesondere ist es nach einer Weiterbildung der Erfindung vorteilhaft, dass die Granuliervorrichtung eine aktiv gekühlt Lochplatte aufweist, mit welcher eine definierte Durchtrittstemperatur der Mischung einstellbar ist. Gerade die Lochplatte kann so gekühlt werden, dass die Extrusionsstränge bei Austritt aus der Lochplatte hinreichend formstabil sind, so dass sie zu der gewünschten Größe der Granulatkörner abgelängt werden können. Dies kann vorzugsweise durch eine Schneideinrichtung unmittelbar an der Lochplatte erfolgen.

Nach einer weiteren Ausführungsform der Erfindung ist es bevorzugt, dass ein Mehrwellen-Extruder angeordnet ist, welcher zum Aufschmelzen der Matrixkomponente, zum Bilden der Mischung durch Vermischen, zum Ausextrudieren und zum Granulieren ausgebildet ist. So wird eine besonders kompakte Anlage erzielt, die effizient zum Herstellen der Granulate eingesetzt werden kann.

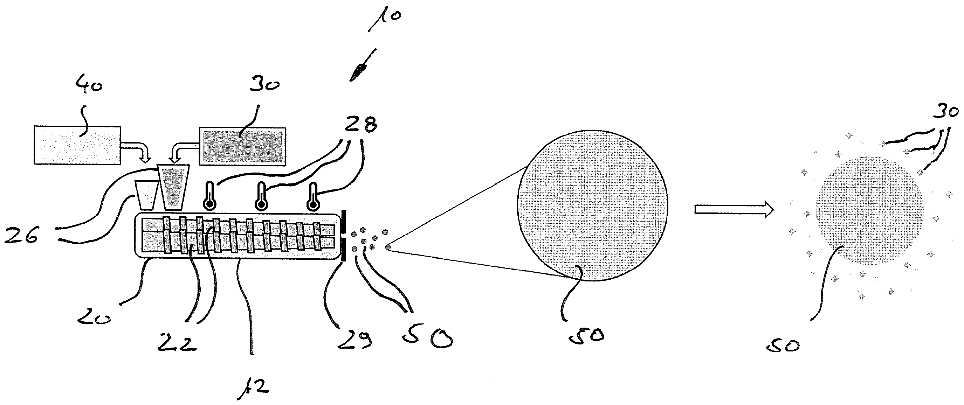

Die Erfindung wird nachfolgend anhand eines bevorzugten Ausführungsbeispiels näher erläutert, das schematisch in der einzigen Figur dargestellt ist.

Die bevorzugte Ausführungsform umfasst eine erfindungsgemäße Anlage 10, welche als eine Granuliervorrichtung 12 einen Extruder 20 aufweist. Der Extruder 20 ist als ein Mehrwellen-Extruder mit zwei Extruderwellen 22 ausgebildet. Ein derartiger Extruder kann auch als Doppelschnecken-Extruder bezeichnet werden. Die Extruderwellen 22 können für einen gleichläufigen Antrieb ausgebildet und angetrieben sein oder für einen gegenläufigen Antrieb.

Der Extruder 20 umfasst ein Gehäuse 24, an dessen linksseitigen Eingangsbereich ein Einlauftrichter 26 jeweils für die Düngerkomponente 30 und die Matrixkomponente 40 angeordnet sind. Der Einlauftrichter 26 für die Matrixkomponente 40 ist dabei in einer Extrusionsrichtung vor dem Einlauftrichter 26 für die Düngerkomponente 30 angeordnet, so dass eine Vorbearbeitung, insbesondere ein Aufschmelzen der Matrixkomponente 40, in dem Extruder 20 vor Zuführung der Düngerkomponente 30 erfolgen kann.

Das Gehäuse 24 des Extruders 20 kann vorzugsweise mit Temperiereinheiten 28 versehen sein, welche schematisch dargestellt sind. Über die Temperiereinheiten 28 kann in einzelnen Abschnitten des Extrudergehäuses 24 eine definierte Einstellung der Temperatur bei der Verarbeitung in den einzelnen Bereichen erfolgen.

Durch die Drehung der Extruderwellen 22 und die Anordnung entsprechender Schneckensegmente und/oder von möglichen Knetfingern und weiteren möglichen Extruderelementen auf den Extruderwellen 22 wird die Matrixkomponente 40 auf eine Verarbeitungstemperatur oberhalb ihres Schmelzpunktes erwärmt. Währenddessen wird die Matrixkomponente 40 mit der mindestens einen Düngerkomponente 30 im Verlauf der Extrusionsrichtung vom linksseitigen Eingang zu dem rechtsseitigen Ausgang an dem Gehäuse 24 des Extruders 20 weitgehend homogen vermischt.

Am Ausgang des Gehäuses 24 ist eine schematisch dargestellte Lochplatte 29 angeordnet, welche vorzugsweise eine Vielzahl von formgebenden Löchern aufweist. Durch die drehende Förderbewegung der Extruderwellen 22 wird die gebildete Mischung mit Druck durch die Löcher der Lochplatte 29 hindurchgepresst. Durch eine nicht dargestellte Ablängeinrichtung, insbesondere eine Schneideinrichtung, werden die Extrusionsstränge zu Granulatkörnern 50 abgelängt, wie schematisch gezeigt ist.

Die so hergestellten Granulatkörner 50 weisen, wie in der Querschnittsansicht eines Granulatkorns 50 gezeigt, eine feine Verteilung der mindestens einen Düngerkomponente 30 in der umgebenen aufgeschmolzenen und wieder ausgehärteten Matrixkomponente 40 auf.

Bei Ausbringen eines derartigen Düngergranulates in einem Freigelände oder auf einem Bodensubstrat kann eine langsame allmähliche Freisetzung der Partikel der Düngerkomponente 30 durch ein Zersetzen der Matrixkomponente 40 erfolgen. Die Matrixkomponente 40 kann insbesondre durch biologische Abbauprozesse allmählich abgebaut werden. Durch die biologische Abbaubarkeit der Matrixkomponente 40 kann diese biologisch abgebaut und vorzugsweise durch die Pflanzen verstoffwechselt werden.

## Patentansprüche

1. Verfahren zum Herstellen von Düngergranulaten bestehend aus
- mindestens einer pulverförmigen oder körnigen Düngerkomponente (30) und
- mindestens einer Matrixkomponente (40), welche ein biologisch abbaubarer Stoff ist und bei einer Raumtemperatur fest und bei einer Verarbeitungstemperatur, welche oberhalb der Raumtemperatur und einer Schmelztemperatur des Stoffes liegt, aufgeschmolzen und fließfähig ist,
wobei
- die Matrixkomponente (40) auf eine Verarbeitungstemperatur erwärmt und aufgeschmolzen wird,
- die aufgeschmolzene Matrixkomponente (40) mit der mindestens einen Düngerkomponente (30) zu einer fließfähigen oder pastösen Mischung vermengt wird,
- die fließfähige oder pastöse Mischung mittels einer Granuliervorrichtung (12) weiterverarbeitet wird und
- die Mischung mit der Granuliervorrichtung (12) zu Granulat gebildet wird, welches eine Temperatur unterhalb der Schmelztemperatur der Matrixkomponente (40) aufweist und bei Raumtemperatur fest ist.

2. Verfahren nach Anspruch 1,
**dadurch gekennzeichnet,**
**dass** als Granuliervorrichtung (12) ein Extruder (20) oder eine Pelletierpresse eingesetzt wird.

3. Verfahren nach Anspruch 2,
**dadurch gekennzeichnet,**
**dass** als Extruder (20) ein Einwellen- oder ein Mehrwellen-Extruder eingesetzt wird.

4. Verfahren nach einem der Ansprüche 1 bis 3,
**dadurch gekennzeichnet,**
**dass** als Matrixkomponente (40) mindestens ein biologisch abbaubares Wachs, insbesondere ein pflanzliches Wachs und/oder ein teilsynthetisches Wachs, verwendet wird.

5. Verfahren nach einem der Ansprüche 1 bis 4,
**dadurch gekennzeichnet,**
**dass** als Matrixkomponente (40) ein biologisch abbaubares Wachs, vorzugsweise Zuckerrohrwachse, Reiskleiewachse, Karnaubawachse und/oder Bienenwachse, und/oder ein biologisch abbaubares Polymer eingesetzt wird, insbesondere ein Biopolymer.

6. Verfahren nach einem der Ansprüche 1 bis 5,
**dadurch gekennzeichnet,**
**dass** als Matrixkomponente (40) ein biologisch abbaubares Biopolymer verwendet wird, welches vorzugsweise zellulosebasiert, ligninbasiert oder stärkebasiert ist..

7. Verfahren nach einem der Ansprüche 1 bis 6,
**dadurch gekennzeichnet,**
**dass** die Mischung durch eine Lochplatte (29) gedrückt und zu Granulatkörnern (50) abgelängt und/oder geformt wird.

8. Verfahren nach Anspruch 7,
**dadurch gekennzeichnet,**
**dass** die Lochplatte (29) aktiv gekühlt wird, wobei die Mischung definiert auf eine Temperatur unterhalb der Schmelztemperatur der Matrixkomponente (40) abgekühlt wird.

9. Verfahren nach einem der Ansprüche 1 bis 8,
**dadurch gekennzeichnet,**
**dass** das Verfahren insgesamt auf einem Mehrwellen-Extruder durchgeführt wird, wobei die mindestens eine Düngerkomponente (30) und die Matrixkomponente (40) in einen Extrusionsraum des Extruders (20) eingeführt werden,
**dass** die Matrixkomponente (40) in dem Extrusionsraum aufgeschmolzen und mit der mindestens einen Düngerkomponente (30) durch die Extruderwellen (22) zu der Mischung vermischt wird und
**dass** die Mischung am Ausgang des Extruders (20) durch eine Lochplatte (29) extrudiert und zu Extrusionssträngen geformt wird, welche zu den Granulatkörnern (50) durch Schneiden oder Brechen abgelängt werden.

10. Anlage zum Herstellen von Düngergranulaten,
dadurch gekenn zeichnet,
dass die Anlage (10) zum Durchführen des Verfahrens nach einem der Ansprüche 1 bis 9 ausgebildet ist.

11. Anlage nach Anspruch 10,
**dadurch gekennzeichnet,**
**dass** diese eine Granuliervorrichtung (12) aufweist, welche einen Extruder (20) oder eine Pelletierpresse umfasst.

12. Anlage nach Anspruch 10 oder 11,
**dadurch gekennzeichnet,**
**dass** die Granuliervorrichtung (12) eine aktiv gekühlte Lochplatte (29) aufweist, mit welcher eine definierte Durchtrittstemperatur der Mischung einstellbar ist.

13. Anlage nach einem der Ansprüche 10 bis 12,
**dadurch gekennzeichnet,**
**dass** ein Mehrwellen-Extruder angeordnet ist, welcher zum Aufschmelzen der Matrixkomponente (40), zum Bilden der Mischung durch Vermischen, zum Ausextrudieren und zum Granulieren ausgebildet ist.
